# FASCICULE DE BREVET EUROPEEN

(11) **EP 2 541 162 B1**
(45) Date de publication et mention de la délivrance du brevet: **06.04.2016**
(21) Numéro de dépôt: 12173192.1
(22) Date de dépôt: 22.06.2012
(51) Int. Cl.: H02S 20/23, F24J 2/52

(54) **Dispositif permettant l'installation de panneaux photovoltaïques**
Vorrichtung zur Montage von Fotovoltaikmodulen
Device enabling the installation of photovoltaic panels

(30) Priorité: 27.06.2011 FR 1101973
(43) Date de publication de la demande: 02.01.2013
(73) Titulaire: SVH ENERGIE, 92200 Neuilly sur Seine (FR)
(72) Inventeur: Sabban, Gilles Ylan, 92200 NEUILLY SUR SEINE (FR)
(74) Mandataire: Gaillarde, Frédéric F. Ch.

(56) Documents cités:
- DE-A1-102009 048 501
- DE-U1-202010 014 168
- US-A1- 2002 036 010

## Description

La présente invention concerne un dispositif pour installer et fixer des panneaux photovoltaïques, permettant une installation simple, légère, rapide et de garantir une étanchéité à l'installation.

L'installation et la fixation des panneaux photovoltaïques sont traditionnellement effectuées à l'aide de systèmes de rails métalliques qui pèsent lourd et nécessitent des moyens de transport adaptés. Compliqués à installer par le nombre de pièces à mettre en oeuvre, les systèmes traditionnels sont souvent exposés au risque d'infiltration d'eau.

Il est connu des documents de l'art antérieur US 2002/036010 A1 et DE 20 2010 014168 U1, une plaque thermoformée permettant l'installation, la fixation et l'intégration de panneaux solaires photovoltaïques, notamment sur des toitures de bâtiments résidentiels ou professionnels neufs, anciens ou dans le cadre d'une rénovation, en remplacement partiel ou total de la couverture.

Le dispositif selon l'invention est défini par l'objet de la revendication 1. Réalisé en polycarbonate thermoformé, il est facile à transporter puisqu'il se positionne dans un panneau photovoltaïque.

Dans le document susmentionné US 2002/036010 A1, le principe de recouvrement horizontal et vertical des plaques, et le principe d'évacuation des eaux pouvant s'infiltrer et/ou passer sous le panneau photovoltaïque à l'aide d'un bourrelet, permet à l'installation une parfaite étanchéité et une installation simple et rapide.

Une difficulté souvent rencontrée lors de l'utilisation du dispositif décrit dans ce document est le passage de câbles entre la plaque et le panneau photovoltaïque.

Les dessins annexés illustrent l'invention.
La FIG 1 représente la plaque au format portrait pour une disposition des panneaux photovoltaïques en portrait.
La FIG 2 représente la plaque au format paysage pour une disposition des panneaux photovoltaïques en paysage.

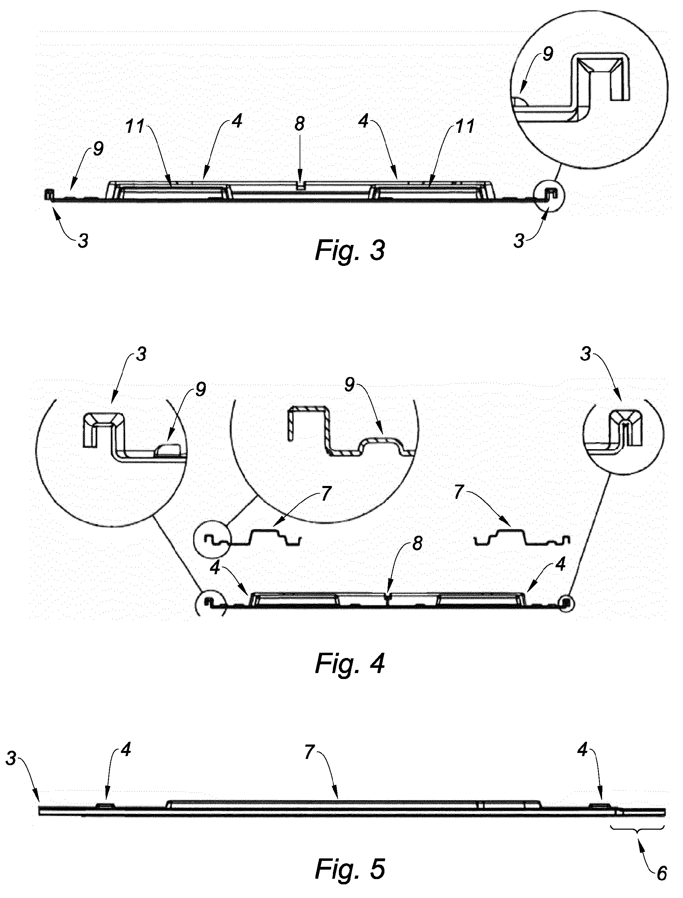

La FIG 3 représente en coupe la partie basse du dispositif de l'invention.
La FIG 4 représente en coupe la partie haute du dispositif de l'invention.
La FIG 5 représente en coupe la vue de côté du dispositif de l'invention.

En référence à ces dessins, le dispositif comporte une plaque thermoformée (1), dans la partie centrale un espace vide (2), une zone de recouvrement latéral des plaques thermoformées (3), des plots (4) supports de pied, des guides et supports du panneau photovoltaïque, des protections des points de fixation (11), une zone de recouvrement vertical bas (5) et de recouvrement vertical haut (6), un bourrelet (7) central de protection et d'évacuation des eaux en provenance du faitage et/ou des infiltrations et de protections des points de fixations, une rainure (8) permettant le passage de câbles, des rehausseurs (9) du panneau photovoltaïque et des butées (10) permettant de caler les plaques supérieures et de chasser l'eau en provenance du faitage.

Il s'agit d'une invention permettant l'installation, la fixation et l'intégration de panneaux solaires photovoltaïques notamment sur des toitures de bâtiment résidentiel ou professionnel neuf, ancien ou dans le cadre d'une rénovation, en remplacement total ou partiel de la couverture.

L'invention concerne un dispositif d'une seule pièce, thermoformé ou tout autre procédé de moulage ou d'emboutissage s'adaptant à un panneau photovoltaïque permettant sa fixation et son intégration sur une toiture.

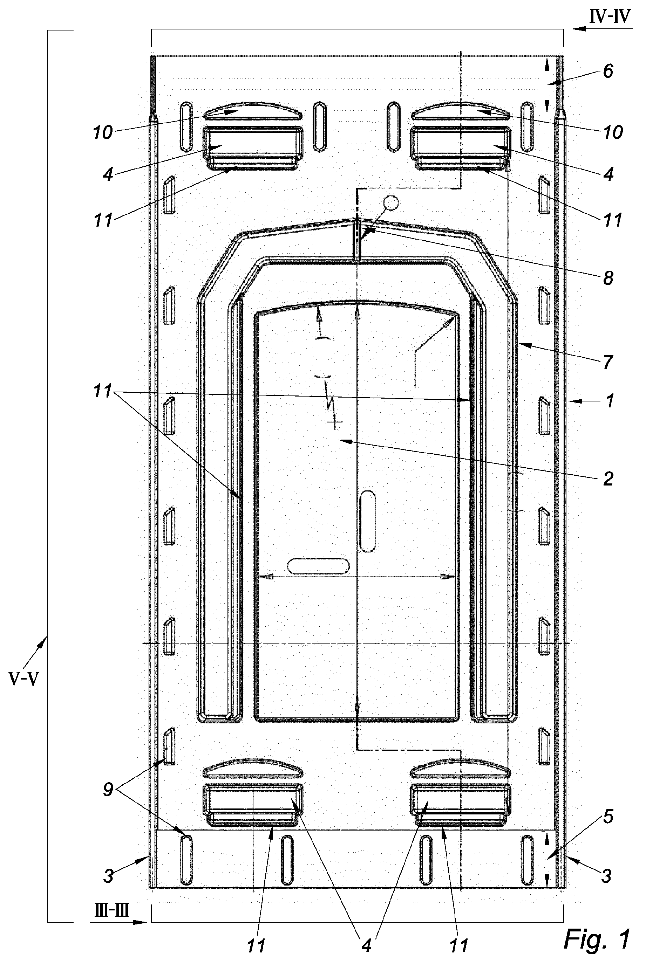

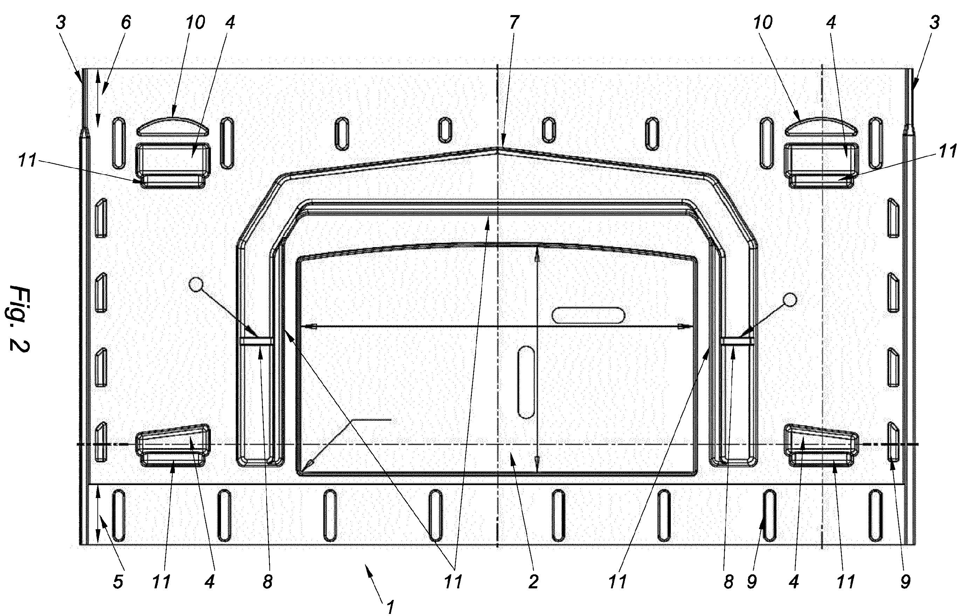

Deux types de modules existent, l'un permettant la disposition des panneaux photovoltaïques au format portrait (FIG 1), l'autre au format paysage (FIG 2).

Ce module permet le transport et la livraison d'une installation photovoltaïque totalement compact puisque le module s'emboite dans le cadre intérieur du panneau photovoltaïque et permet ainsi l'empilement des panneaux et des modules.

Ce module comporte 4 plots (4) permettant le positionnement, le guidage et le calage des panneaux photovoltaïques ainsi que de cale pied permettant aux poseurs de positionner leurs pieds dessus et ainsi procéder à l'installation en toute sécurité. Ces plots (4) permettent la protection des points de fixation de la plaque (11).

Il comporte aussi un bourrelet (7) central permettant la déviation sur les cotés d'un écoulement d'eau en provenance du dessus ainsi que des condensas en provenance des panneaux photovoltaïques. Ce bourrelet (7) permet la protection de points de fixation de la plaque (11).

Des rehausseurs (9) permettent de rehausser le panneau photovoltaïque et ainsi ventiler l'installation.

Des cales (10) permettent de caler les plaques supérieures et de chasser l'eau en provenance du faitage.

Une rainure (8) sur le bourrelet (7) permet le passage des câbles entre le panneau et la plaque.

Un espace vide (2) permet les passages de câbles ainsi que l'accès à la charpente.

L'ensemble des modules sont assemblés entre eux par emboitement latéralement (3), par chevauchement verticalement (5) - (6) et permet ainsi une parfaite étanchéité.

Les modules remplacent le système d'étanchéité existant et permet une parfaite maîtrise des étanchéités.

Les modules sont destinés à prendre place sur tout type de toiture et de charpente. Ils peuvent être installés sur les toitures de maison comme sur celles de bâtiments professionnels, neuf ou dans le cadre d'une rénovation.

Le procédé peut être installé en plaine ou à la montagne, son faible poids n'altère pas la capacité de la charge de la charpente lorsque qu'elle doit subir la charge de la neige.

Le module peut être fabriqué par thermoformage, moulage, emboutissage, en toute matière plastique opaque ou transparente et métal.

Selon une variante illustré par la FIG.2 une plaque au format paysage accueillera les panneaux photovoltaïque lorsque qu'il sera nécessaire de les installer et les disposer au format paysage.

La plaque sera dimensionnée en fonction de la taille du panneau photovoltaïque. La dimension entre les espaces de recouvrement latéral (3), supérieur et inferieur (5) - (6) permettant l'étanchéité sera identique à celle du panneau photovoltaïque et permettra ainsi à la plaque de s'emboiter dans le cadre du panneau photovoltaïque.

Le dispositif selon l'invention est particulièrement destiné à la pose de panneaux photovoltaïques cadrés.

## Revendications

1. Plaque thermoformée adaptée pour s'emboîter dans un panneau photovoltaïque et permettre la fixation et l'intégration de ce panneau sur une toiture de bâtiment, comprenant des moyens étanches d'emboîtement latéraux (3) et de chevauchement verticaux (5, 6), un espace vide (2) pour le passage de câbles et l'accès à la charpente de ladite toiture et un bourrelet (7) disposé de façon à éviter l'écoulement de l'eau en provenance du faîtage de ladite toiture dans ledit espace vide (2), **caractérisée en ce que** ledit bourrelet (7) comprend une rainure (8) permettant le passage de câbles entre ladite plaque et ledit panneau photovoltaïque.

2. Plaque selon la revendication 1, **caractérisée en ce qu'**elle comprend des points de fixation (11).

3. Plaque selon l'une quelconque des revendications précédentes, **caractérisée en ce qu'**elle comprend des plots (4) de positionnement, guidage, calage desdits panneaux photovoltaïques et de support des pieds des poseurs.

4. Plaque selon les revendications 2 et 3, **caractérisée en ce que** ledit bourrelet (7) et lesdits plots (4) protègent lesdits points de fixation (11).

5. Plaque selon l'une quelconque des revendications précédentes, caracatérisée en ce qu'elle comprend des moyens (9) de rehaussement et de ventilation dudit panneau photovoltaïque.

6. Plaque selon l'une quelconque des revendications précédentes, **caractérisée en ce qu'**elle comprend des cales (10) permettant de caler les plaques supérieures et de chasser l'eau en provenance du faîtage de ladite toiture.

7. Ensemble formé par un panneau photovoltaïque et une plaque conforme à l'une quelconque des revendications précédentes emboîtée dans ce panneau photovoltaïque.

## Patentansprüche

1. Warmgeformte Platte, die ausgeführt ist, um in ein Solarmodul eingepasst zu werden, und um die Befestigung und die Integration dieses Moduls auf einem Gebäudedach zu ermöglichen, dichte seitliche Einpassmittel (3) und vertikale Überlappungsmittel (5, 6), einen freien Raum (2) zum Durchführen von Kabeln und den Zugriff auf den Dachstuhl des besagten Daches und einen Wulst (7) umfassend, der angeordnet ist, um das Ablaufen des Wassers vom Dachfirst des besagten Daches in den besagten freien Raum (2) zu vermeiden, **dadurch gekennzeichnet, dass** der besagte Wulst (7) eine Einkerbung (8) umfasst, die das Durchführen von Kabeln zwischen der besagten Platte und dem besagten Solarmodul ermöglicht.

2. Platte nach Anspruch 1, **dadurch gekennzeichnet, dass** sie Befestigungsstellen (11) umfasst.

3. Platte nach irgendeinem der vorherigen Ansprüche, **dadurch gekennzeichnet, dass** sie Stifte (4) zum Positionieren, Führen, Verkeilen der besagten Solarmodule und zum Stützen der Füße der Monteure umfasst.

4. Platte nach den Ansprüchen 2 und 3, **dadurch gekennzeichnet, dass** der besagte Wulst (7) und die besagten Stifte (4) die besagten Befestigungsstellen (11) schützen.

5. Platte nach irgendeinem der vorherigen Ansprüche, **dadurch gekennzeichnet, dass** sie Mittel (9) zum Erhöhen und Hinterlüften des besagten Solarmoduls umfasst.

6. Platte nach irgendeinem der vorherigen Ansprüche, **dadurch gekennzeichnet, dass** sie Keile (10) umfasst, mit denen die oberen Platten verkeilt und das Wasser vom Dachfirst des besagten Daches abgelassen werden können.

7. Einheit, die aus einem Solarmodul und einer Platte nach irgendeinem der vorherigen Ansprüche gebildet wird, die in dieses Solarmodul eingepasst wird.

## Claims

1. A thermoformed plate adapted to be nested into a photovoltaic panel and to allow the fastening and the integration of this panel on a building roof, comprising lateral nesting (3) and vertical overlapping (5, 6) watertight means, a gap (2) for the passage of cables and the access to the framework of said roof and a bead (7) disposed so as to prevent the flow of water coming from the ridge of said roof in said gap (2), **characterized in that** said bead (7) comprises a groove (8) allowing the passage of cables between said plate and said photovoltaic panel.

2. The plate according to claim 1, **characterized in that** it comprises fastening points (11).

3. The plate according to any one of the preceding claims, **characterized in that** it comprises blocks (4) for positioning, guiding, wedging said photovoltaic panels and for supporting feet of the installers.

4. The plate according to claims 2 and 3, **characterized in that** said bead (7) and said blocks (4) protect said fastening points (11).

5. The plate according to any one of the preceding claims, **characterized in that** it comprises means (9) for raising and ventilating said photovoltaic panel.

6. The plate according to any one of the preceding claims, **characterized in that** it comprises wedges (10) allowing wedging the upper plates and evacuating water coming from the ridge of said roof.

7. An assembly formed by a photovoltaic panel and a plate in compliance with any one of the preceding claims nested in this photovoltaic panel.
